# EUROPÄISCHE PATENTANMELDUNG

(11) **EP 2 481 307 A1**
(43) Veröffentlichungstag der Anmeldung: **01.08.2012**
(21) Anmeldenummer: 12152226.2
(22) Anmeldetag: 24.01.2012
(51) Int. Cl.: A24C 5/60, B23K 26/42

(54) **Herstellen von stabförmigen Artikeln der Tabak verarbeitenden Industrie**

(30) Priorität: 01.02.2011 DE 102011003466
(71) Anmelder: HAUNI Maschinenbau AG, 21033 Hamburg (DE)
(72) Erfinder: Schaadt, Uwe, 21339 Lüneburg (DE); Holm, Henning, 21423 Drage (DE)
(74) Vertreter: Seemann, Ralph

(57) **Zusammenfassung**

Die Erfindung betrifft ein Verfahren zum Herstellen von stabförmigen Artikeln (7, 50, 100) der Tabak verarbeitenden Industrie, insbesondere Zigaretten (100) oder Doppelzigaretten (50), wobei die stabförmigen Artikel (7, 50, 100) unter Verwendung eines Bearbeitungsorgans (17, 171, 172) bearbeitet werden, wobei die stabförmigen Artikel (7, 50, 100) vor und nach der Bearbeitung der stabförmigen Artikel (7, 50, 100) queraxial gefördert werden.

Das Verfahren zeichnet sich dadurch aus, dass ein, insbesondere freier, Bereich zwischen der Oberfläche der stabförmigen Artikel (7, 50, 100) und dem mindestens einen Bearbeitungsorgan (17, 171, 172) unter Verwendung einer Bereichsüberwachungseinrichtung (141, 142, 151) wenigstens teilweise überwacht wird. Ferner betrifft die Erfindung eine Maschine (2) der Tabak verarbeitenden Industrie, insbesondere Filteransetzmaschine, zum Herstellen von stabförmigen Artikeln (7, 50, 100) der Tabak verarbeitenden Industrie, insbesondere Filterzigaretten, mit mindestens einem Bearbeitungsorgan (17, 171, 172) zum Bearbeiten der stabförmigen Artikel (7, 50, 100).

## Beschreibung

Die Erfindung betrifft ein Verfahren zum Herstellen von stabförmigen Artikeln der Tabak verarbeitenden Industrie, insbesondere Zigaretten oder Doppelzigaretten, wobei die stabförmigen Artikel unter Verwendung mindestens eines Bearbeitungsorgans bearbeitet werden, wobei die Artikel vor und nach der Bearbeitung der Artikel queraxial gefördert werden.

Ferner betrifft die Erfindung eine Maschine der Tabak verarbeitenden Industrie, insbesondere Filteransetzmaschine, zum Herstellen von stabförmigen Artikeln der Tabak verarbeitenden Industrie, insbesondere Filterzigaretten, mit mindestens einem Bearbeitungsorgan zum Bearbeiten der stabförmigen Artikel.

Insbesondere betrifft die Erfindung ein Verfahren zum Herstellen von stabförmigen Artikeln der Tabak verarbeitenden Industrie, insbesondere Filterzigaretten, wobei die mit einer Umhüllung versehenen stabförmigen Artikel unter Verwendung eines Bearbeitungsorgans auf ihren Umhüllungen oder Umhüllungsstreifen bearbeitet werden, wobei die Artikel vor und nach der Bearbeitung der Umhüllungen, insbesondere queraxial, gefördert werden.

Unter stabförmigen Artikeln oder Produkten der Tabak verarbeitenden Industrie werden im vorliegenden Zusammenhang insbesondere Zigaretten, Filterstäbe, Multisegmentfilter sowie Tabakstöcke für Zigaretten verstanden. Insbesondere werden unter stabförmigen Produkten der Tabak verarbeitenden Industrie Filterzigaretten verstanden, wobei die Filterzigaretten jeweils aus einem Filterstopfen und einem Tabakstock bestehen, die miteinander verbunden sind.

Bei der Herstellung von Zigaretten, insbesondere Filterzigaretten, werden im Bereich der Filter Nebenluftkanäle in Form von Löchern oder Perforationslöchern eingebracht, durch die beim Ziehen an den Zigaretten dem Rauch Nebenluft zugeführt wird. Es wird dabei angestrebt, einen relativ großen Nebenluftstrom zuzuführen, der in einem vorgegebenen, möglichst konstanten Verhältnis zu dem die Zigaretten verlassenden Gesamtstrom stehen soll. Dieses Verhältnis wird mit Gesamtventilationsgrad bezeichnet. Es ist bereits bekannt, Zigaretten mit Löchern zu versehen, d. h. sie zu perforieren, z. B. durch Entlangrollen an einer mit Nadeln besetzten Rollfläche.

Es ist auch bekannt, Zigaretten mittels Laserstrahlen zu perforieren, wobei jeweils eine bestimmte Anzahl von Löchern mit einem gewünschten Gesamtquerschnitt aufgebracht wird.

Bei der Konfektionierung von Zigaretten an einer Filteransetzmaschine wird bei den hergestellten Filterzigaretten unter Verwendung einer Perforationseinrichtung eine Perforation aus Löchern in das Hüllmaterial oder die Umhüllungsstreifen der stabförmigen Artikel eingebracht. Insbesondere wird dabei eine gleichmäßige Perforation in die Umhüllungsstreifen eingebracht, wodurch die Umhüllungsstreifen eine vorbestimmte, gewünschte Luftdurchlässigkeit beim Rauchen aufweisen, so dass aufgrund des eingebrachten Perforationsmusters in die Umhüllungsstreifen Nebenluft angesaugt wird, mit der Anteile von Nikotin und Kondensat im Rauch beeinflusst werden. Insbesondere wird die Perforation in die Umhüllungsstreifen unter Verwendung von Laserstrahlen als kohärente Strahlung eingebracht, wodurch sich eine sehr genaue konstante Zone gewünschter Luftdurchlässigkeit in der Umhüllung der Rauchartikel ergibt.

In DE 27 50 038 C2 ist beispielsweise ein Verfahren zum Steuern des Perforierens von Zigaretten oder anderen stabförmigen Rauchartikeln beschrieben. Zur Kompensation der Tabakstockventilation wird vorgeschlagen, die Luftdurchlässigkeit des Zigarettenpapiers vor der Strangbildung oder auf einer separaten Prüftrommel vor der Perforierung zu messen.

Außerdem ist in DE 27 54 104 A1 eine Vorrichtung zum Herstellen einer Zone gewünschter Luftdurchlässigkeit in einem Hüllmaterialstreifen für stabförmige Artikel der Tabak verarbeitenden Industrie beschrieben.

Weiterhin ist in DE 41 06 127 A1 ein Verfahren zum Perforieren von Hüllmaterial stabförmiger Artikel der Tabak verarbeitenden Industrie offenbart, bei dem das zu perforierende Hüllmaterial durch eine Perforationszone bewegt wird und ein entsprechender gepulster energiereicher Strahl in der Perforationszone auf das Hüllmaterial ausgerichtet wird, um Perforationslöcher auf dem Hüllmaterial auszubilden.

Ausgehend von diesem Stand der Technik besteht die Aufgabe der Erfindung darin, die Bearbeitung von stabförmigen Artikeln während eines Herstellungsprozesses der stabförmigen Artikel zu verbessen, wobei es insbesondere möglich sein soll, potenzielle Gefahrenquellen für eine Maschine frühzeitig zu erkennen und gegebenenfalls zu beseitigen.

Gelöst wird diese Aufgabe durch ein Verfahren zum Herstellen von stabförmigen Artikeln der Tabak verarbeitenden Industrie, insbesondere Zigaretten oder Doppelzigaretten, wobei die stabförmigen Artikel unter Verwendung mindestens eines Bearbeitungsorgans bearbeitet werden, wobei die Artikel vor und nach der Bearbeitung der Artikel queraxial gefördert werden, das dadurch weitergebildet wird, dass ein, insbesondere betriebsmäßig freier, Bereich zwischen der Oberfläche der zu bearbeitenden stabförmigen Artikel und dem mindestens einen Bearbeitungsorgan unter Verwendung einer Bereichsüberwachungseinrichtung wenigstens teilweise überwacht wird, wobei insbesondere der Bereich zwischen der Oberfläche der jeweiligen, insbesondere zu bearbeitenden, stabförmigen Artikel und dem mindestens einen Bearbeitungsorgan, insbesondere kontinuierlich oder intermittierend, auf die Anwesenheit von unerwünschten Störpartikeln und/oder von Fremdkörpern im Bereich zwischen den Oberflächen der Artikel und dem mindestens einen Bearbeitungsorgan überwacht wird.

Die Erfindung beruht auf dem Gedanken, dass unter Verwendung der Bereichsüberwachungseinrichtung bei der Bearbeitung z.B. Perforation der stabförmigen Artikel bzw. der Bearbeitung der Oberflächen der Umhüllungen der stabförmigen Artikel Fremdkörper im Bereich zwischen dem mindestens einen Bearbeitungsorgan und dem zu bearbeitenden stabförmigen Artikel erfasst oder erkannt werden, wobei die Fremdkörper oder Störpartikel im freien Bereich zwischen dem mindestens einen Bearbeitungsorgan und der Oberfläche der stabförmigen Artikel zu Schäden an den hergestellten Artikeln oder an der Vorrichtung führen können.

Insofern wird die Erkennung von Störpartikeln und/oder Fremdkörpern als mögliche Fehlerquellen rechtzeitig erkannt, wobei dadurch beispielsweise eine möglicherweise entstehende Staubildung von stabförmigen Artikeln während des Produktionsprozesses an der Vorrichtung bei der Bearbeitung der stabförmigen Artikel frühzeitig erkannt wird.

Vorzugsweise werden die Umhüllungen der stabförmigen Artikel mit einer Laser-Perforationseinrichtung als Bearbeitungsorgan mit einem Perforationsmuster versehen, wobei die Perforationseinrichtung als Lasereinrichtung ausgebildet ist. Hierbei wird der Bereich zwischen der Lasereinrichtung bzw. zwischen dem Austritt des Laserstrahls an der Lasereinrichtung z.B. an einem Strahlungskopf und der Oberfläche der zu bearbeitenden bzw. zu perforierenden stabförmigen Artikel überwacht. Wird während der Überwachung des freien Bereiches zwischen dem Strahlungskopf der Lasereinrichtung und dem zu perforierenden stabförmigen Artikel beispielsweise ein Fremdkörper z.B. in Form eines stabförmigen Artikels oder eines Teils davon mittels der Bereichsüberwachungseinrichtung erfasst, so kann der Perforationsprozess der stabförmigen Artikel und damit der Produktionsprozess hierbei unterbrochen werden, um den Fremdkörper an der Perforationseinrichtung zu beseitigen.

Durch die vorgesehene Bereichsüberwachungseinrichtung wird eine Art Störungserkennungseinrichtung für den freien Bereich zwischen dem mindestens einen Bearbeitungsorgan und den zu bearbeitenden stabförmigen Artikeln bereitgestellt, wodurch die Produktionsqualität der hergestellten Artikel erhöht wird. Darüber hinaus werden auch rechtzeitig zu potenziellen Schäden führende Fremdpartikel erkannt, um vor der Entstehung eines möglichen Schadens die Fehlerquellen bzw. Fremdpartikel wie z.B. nicht gewünschte lose Zigaretten oder Zigarettenabschnitte bei der Bearbeitung bzw. Perforierung der stabförmigen Artikel zu erkennen und den Herstellungsprozess kurzzeitig zu stoppen, bis die Fehlerquellen im freien Bereich beseitigt sind.

Beispielsweise werden stabförmige Artikel an einer Filteransetzmaschine auf einer Fördertrommel queraxial gefördert, wobei während der queraxialen Förderung und unter Verwendung einer als Bearbeitungsorgan ausgebildeten Laserperforationseinrichtung die Umhüllungen der stabförmigen Artikel mit einem Perforationsmuster versehen werden. Hierbei werden die stabförmigen Artikel während der Bearbeitung oder Perforation positionsneutral während des Bearbeitungsvorgangs gehalten, wobei hierbei die stabförmigen Artikel sich im Stillstand bezüglich der queraxialen Förderrichtung auf der Fördertrommel und in Rotation um ihre eigene Längsachse befinden. Dabei ist benachbart an der als Förderorgan ausgebildeten Fördertrommel die Bearbeitungsvorrichtung oder die Laserperforationseinrichtung angeordnet. Vor und nach Einbringen des Perforationsmusters werden die stabförmigen Artikel, insbesondere Filterzigaretten auf der Fördertrommel queraxial gefördert. Durch die Verwendung der Perforationseinrichtung erfolgt ein berührungsloses Bearbeiten der Oberfläche der stabförmigen Artikel bzw. der Oberfläche der Umhüllungen der stabförmigen Artikel.

Als (betriebsmäßig) freier Bereich zwischen dem mindestens einen Bearbeitungsorgan für die stabförmigen Artikel und der Oberfläche der stabförmigen Artikel wird der Arbeitsbereich des Bearbeitungsorgans an der Fördertrommel oder dem Förderorgan verstanden, in dem die Bearbeitung der stabförmigen Artikel ausgeführt wird.

Des Weiteren ist es in einem bevorzugten Verfahrensschritt vorgesehen, dass der freie Bereich zwischen der Oberfläche der stabförmigen Artikel und dem mindestens einen Bearbeitungsorgan vor der Bearbeitung der Artikel und/oder während der Bearbeitung der stabförmigen Artikel und/oder nach Bearbeitung der stabförmigen Artikel überwacht wird. Insbesondere wird unter einer Bearbeitung von stabförmigen Artikeln die Bearbeitung der Umhüllungen oder Umhüllungsstreifen der mit Umhüllung versehenen stabförmigen Artikel, insbesondere Doppelzigaretten, verstanden.

Im Rahmen der Erfindung ist es hierbei vorgesehen, dass Umhüllungsstreifen der stabförmigen Artikel, wie z.B. Zigarettenpapier und/oder Belagpapierstreifen der stabförmigen Artikel unter Verwendung wenigstens eines Lasers mit Perforationen versehen werden, die durch einen entsprechenden betriebenen, vorzugsweise gepulsten, Laser erzeugt werden. Vorzugsweise werden dabei die Perforationsmuster in den stabförmigen Artikeln unter Verwendung wenigstens einer Strahlungsquelle, insbesondere einenLaser, in den Umhüllungsstreifen der stabförmigen Artikel gebrannt oder eingebracht.

Des Weiteren zeichnet sich das Verfahren in einer Ausgestaltung dadurch aus, dass während der Bearbeitung der stabförmigen Artikel der jeweilige stabförmige Artikel positionsneutral in Bezug auf das Bearbeitungsorgan angeordnet wird oder ist. Unter positionsneutral wird im Rahmen der Erfindung insbesondere die temporäre, ortsfeste Lage der Längsachse der zu bearbeitenden stabförmigen Artikel während des Bearbeitungsprozesses verstanden, wobei der Artikel während der Bearbeitung in der positionsneutralen Lage um seine Rotationsachse rotiert wird. Hierbei wird der stabförmige Artikel ohne translatorische Förderung in queraxialer Richtung rotierend im Bereich der Bearbeitungseinrichtung auf dem Förderorgan gehalten.

Überdies ist es in einer Weiterbildung des Verfahrens vorteilhaft, dass die stabförmigen Artikel unter Verwendung von mindestens zwei Bearbeitungsorganen, die als Laserstrahlungsköpfe ausgebildet sind, mit zwei Perforationsmustern versehen werden. Das Einbringen eines Perforationsmusters in die Umhüllung der stabförmigen Artikel erfolgt dabei insbesondere berührungslos.

Ferner zeichnet sich eine Ausführungsform des Verfahrens dadurch aus, dass der betriebsmäßig freie Bereich zwischen der Oberfläche der stabförmigen Artikel und dem mindestens einen Bearbeitungsorgan unter Verwendung von mindestens einem als Bereichsüberwachungseinrichtung ausgebildeten Lichttaster, vorzugsweise Laserlichttaster oder Infrarotlichttaster oder Weißlichttaster, überwacht wird. Als Alternative zu den genannten Lichttastern sind auch entsprechende (Einweg-)Lichtschranken wie Laserlichtschranken, Infrarotlichtschranken etc. einsetzbar oder vorgebbar.

Des Weiteren ist es in einer Weiterbildung bevorzugt, dass in Abhängigkeit der von der Bereichsüberwachungseinrichtung im freien Bereich zwischen der Oberfläche der stabförmigen Artikel und dem mindestens einen Bearbeitungsorgan erfassten Partikelform und/oder Partikelgröße und/oder der Anwesenheitsdauer von wenigstens einem Partikel oder Fremdkörper im Bereich zwischen der Oberfläche der Artikel und dem mindestens einen Bearbeitungsorgan der Herstellungsprozess beeinflusst, insbesondere gestoppt, wird.

Ein Anhalten des Herstellungsprozesses erfolgt insbesondere dann, wenn bei Verwendung einer Lasereinrichtung als Bearbeitungsorgan zum Einbringen eines Perforationsmusters in die Umhüllungen der stabförmigen Artikel brennbare Partikel im freien Bereich zwischen dem Bearbeitungsorgan (Lasereinrichtung) und den zu perforierenden stabförmigen Artikeln festgestellt werden.

Außerdem zeichnet sich das Verfahren in einer Ausgestaltung dadurch aus, dass unter Verwendung der Bereichsüberwachungseinrichtung der Bereich in Bezug auf die Längsachse der stabförmigen Artikel in längsaxialer Richtung und/oder in queraxialer Richtung überwacht wird. Durch die Bereichsüberwachungseinrichtung kann hierbei der zu überwachende Bereich teilweise oder komplett erfasst werden. Insbesondere wird im Rahmen der Erfindung unter einem Bereich, der durch die Bereichsüberwachungseinrichtung überwacht wird, eine Fläche oder einen Raum bzw. ein Raumvolumen zwischen dem mindestens einen Bearbeitungsorgan und dem zu bearbeitenden stabförmigen Artikel verstanden.

Darüber hinaus zeichnet sich eine Ausführungsform des Verfahrens dadurch aus, dass der, insbesondere betriebsmäßig freie, Bereich, zwischen der Oberfläche der stabförmigen Artikel und dem mindestens einen Bearbeitungsorgan von mindestens einem Lichttaster, vorzugsweise Laserlichttaster, fächerartig überwacht wird.

Gemäß einer bevorzugten Weiterbildung des Verfahrens ist außerdem vorgesehen, dass in Abhängigkeit der Größe der Störpartikel und/oder der Größe der Fremdkörper die Bearbeitung der stabförmigen Artikel durch das mindestens eine Bearbeitungsorgan, vorzugsweise für eine vorbestimmte Zeitdauer, unterbrochen wird und/oder die Herstellung von stabförmigen Artikeln gestoppt wird.

Anhand der erfassten Störpartikel und/oder Fremdkörper im Bereich der Oberfläche der stabförmigen Artikel und dem Bearbeitungsorgan wird beispielsweise unter Verwendung einer Auswerteeinrichtung ein Istwert-Sollwert-Wertvergleich mit einem vorbestimmten Sollwert für eine Partikelgröße durchgeführt, so dass bei Überschreiten des Sollwerts für eine Partikelgröße bzw. Fremdkörpergröße zunächst durch eine Deaktivierung bzw. Abschaltung des wenigstens einen Bearbeitungsorgans die Bearbeitung der stabförmigen Artikel für eine vorbestimmte Zeitdauer unterbrochen wird.

Hierdurch wird gewährleistet, dass bei der Perforation von Filterzigaretten mittels einer Laserperforationseinrichtung als Bearbeitungsorgan die Laserperforationseinrichtung abgeschaltet wird, sobald ein Störpartikel erfasst wird. Hierbei wird die Maschine mit der Laserperforationseinrichtung nicht angehalten. Die nicht zu bearbeitenden z.B. nicht perforierten Filterzigaretten werden anschließend als Ausschuss aus dem weiteren Prozess entfernt.

Darüber hinaus ist es im Rahmen der Erfindung weiterhin möglich, dass anhand eines zweiten Istwert-Sollwert-Vergleichs bei Überschreiten eines zweiten Sollwerts für die Störpartikelgröße bzw. Fremdkörpergröße der Herstellungsprozess komplett unterbrochen wird.

Ist nach einer erneuten Messung der erfasste Störpartikel nicht mehr in dem überwachten Bereich vorhanden, wird die Laserperforationseinrichtung wieder eingeschaltet.

Darüber hinaus ist im Rahmen der Erfindung vorgesehen, dass bei Vorhandensein von Fremdkörpern oder Störpartikeln im überwachten Bereich die Maschine abgeschaltet wird, um den unerwünschten Fremdkörper entfernen zu können.

Darüber hinaus wird die Aufgabe gelöst durch eine Maschine der Tabak verarbeitenden Industrie, insbesondere Filteransetzmaschine, zum Herstellen von stabförmigen Artikeln der Tabak verarbeitenden Industrie, insbesondere Filterzigaretten, mit mindestens einem Bearbeitungsorgan zum Bearbeiten der stabförmigen Artikel, die dadurch weitergebildet wird, dass eine Bereichsüberwachungseinrichtung zum wenigstens teilweisen Überwachen eines, insbesondere betriebsmäßig freien, Bereichs zwischen der Oberfläche eines stabförmigen Artikels und dem mindestens einen Bearbeitungsorgan vorgesehen ist, wobei insbesondere unter Verwendung der Bereichsüberwachungseinrichtung die Anwesenheit von unerwünschten Störpartikeln und/oder Fremdkörpern im Bereich zwischen der Oberfläche der stabförmigen Artikel und dem mindestens einen Bearbeitungsorgan überwachbar ist, wobei insbesondere die Bereichsüberwachungseinrichtung benachbart zu einem Förderorgan für die stabförmigen Artikel, vorzugsweise einer Fördertrommel, ortsfest angeordnet ist, so dass beispielsweise sich eine kompakte Anordnung der Bereichsüberwachungseinrichtung und des Bearbeitungsorgans an der Fördertrommel ergibt. Hierbei werden die Störpartikel und/oder die Fremdkörper hinsichtlich ihrer Größe klassifiziert und auf Obergrenzen und Untergrenzen überwacht.

Vorteilhafterweise ist bei der Maschine ferner vorgesehen, dass das mindestens eine Bearbeitungsorgan als Laserperforationseinrichtung, insbesondere als Laser-Strahlungskopf, ausgebildet ist und benachbart zu einem Förderorgan für die stabförmigen Artikel, vorzugsweise Fördertrommel, ortsfest angeordnet ist, wobei das Bearbeitungsorgan in Bezug auf die Längsachse der auf dem Förderorgan angeordneten stabförmigen Artikel in längsaxialer Richtung neben wenigstens einer an den stabförmigen Artikeln angreifenden Rollvorrichtung, insbesondere Rollnocken, angeordnet ist. Hierbei werden die stabförmigen Artikel auf einer Fördertrommel in queraxialer Richtung zu dem mindestens einen Bearbeitungsorgan gefördert, wobei im Bereich des Bearbeitungsorgans beispielsweise ein Rollnocken oder Rollband vorgesehen ist, der in Eingriff mit dem stabförmigen Artikel gebracht wird, so dass unter Verwendung des Rollnockens und/oder des Rollbandes die stabförmigen Artikel jeweils in einer positionsneutralen Anordnung während der Bearbeitung oder der Perforation der Umhüllungen der stabförmigen Artikel positionsneutral gehalten werden.

In einer Ausgestaltung der Maschine ist bevorzugterweise vorgesehen, dass die Bereichsüberwachungseinrichtung derart angeordnet ist, dass der Bereich zwischen der Oberfläche der stabförmigen Artikel und dem wenigstens einen Bearbeitungsorgan quer, insbesondere senkrecht, zur jeweiligen Längsachse der stabförmigen Artikel überwachbar ist. Hierbei sind beispielsweise die fächerförmigen Messbereiche der Laserperforationseinrichtung parallel zur Längsachse der zu perforierenden stabförmigen Artikel ausgebildet oder aufgespannt, wobei die Laserstrahlung einer Laserperforationseinrichtung (als Bearbeitungsorgan) quer zur Längsachse der zu perforierenden stabförmigen Artikel gerichtet ist. Dadurch wird beispielsweise in radialer Richtung einer Fördertrommel, auf der die stabförmigen Artikel gefördert werden, der Bereich zwischen den stabförmigen Artikeln und der Laserperforationseinrichtung abgetastet oder erfasst.

In einer alternativen Ausführungsform ist außerdem vorgesehen, dass die Bereichsüberwachungseinrichtung derart angeordnet ist, dass der Bereich zwischen der Oberfläche der stabförmigen Artikel und dem mindestens einen Bearbeitungsorgan parallel zur jeweiligen Längsachse der stabförmigen Artikel überwachbar ist. Hierbei wird der Bereich zwischen dem Bearbeitungsorgan und dem zu bearbeitenden stabförmigen Artikel in längsaxialer Richtung des Artikels überwacht.

Darüber hinaus ist bei einer Ausgestaltung der Maschine weiterhin vorgesehen, dass die Bereichsüberwachungseinrichtung mit einer Auswerteeinrichtung verbunden ist, so dass unter Verwendung der Auswerteeinrichtung die Größe der Störpartikel und/oder die Größe der Fremdkörper im Bereich zwischen der Oberfläche der stabförmigen Artikel und dem mindestens einen Bearbeitungsorgan ermittelbar ist und in Abhängigkeit der Größe der Störpartikel und/oder der Größe der Fremdkörper das mindestens eine Bearbeitungsorgan deaktiviert ist und/oder die Maschine abgeschaltet wird oder ist.

Insbesondere ist bei der Maschine in einer Ausführungsform vorgesehen, dass unter Verwendung der Bereichsüberwachungseinrichtung wenigstens ein Teil eines neben dem mindestens einen Bearbeitungsorgan vorgesehenen Rollnockens für die stabförmigen Artikel überwacht wird oder überwachbar ist.

Darüber hinaus zeichnet sich die Maschine dadurch aus, dass sie gemäß dem voranstehend beschriebenen Verfahren betreibbar ist oder betrieben wird. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung des Aufbaus und der Ventilationsgrade einer Zigarette,
- Fig. 2: eine schematische Darstellung eines Teils einer Filteransetzmaschine mit einer Perforationsvorrichtung gemäß dem Stand der Technik,
- Fig. 3a: eine schematische Darstellung einer Perforationsvorrichtung einer Filteransetzmaschine im Querschnitt,
- Fig. 3b: eine schematische Draufsicht auf die Perforationsvorrichtung von Fig. 3a,
- Fig. 4a: eine schematische Darstellung einer weiteren Perforationsvorrichtung einer Filteransetzmaschine im Querschnitt und
- Fig. 4b: eine schematische Seitenansicht der in Fig. 4a dargestellten Perforationsvorrichtung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

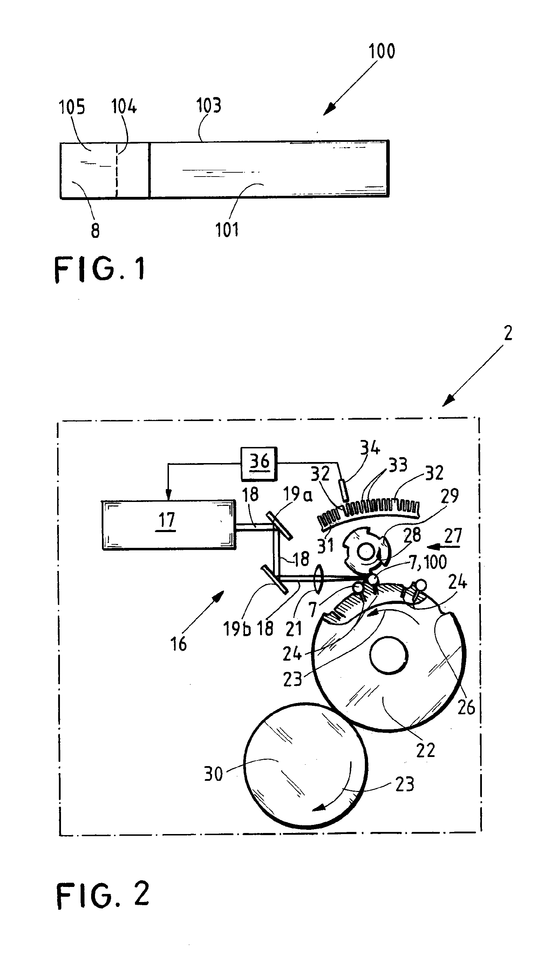

Fig. 1 zeigt schematisch den Aufbau einer (Einzel-)Filterzigarette 100. Dabei ist die Filterzigarette 100 in einen Tabakstock 101 und einen Filter 8 aufgeteilt. Der Tabakstock 101 wird von einem porösen Zigarettenumhüllungsstreifen 103 umgeben. Hierzu wird ein Umhüllungsstreifen um den Tabakstrang herumgewickelt und von dem umwickelten Tabakstrang wird dann ein Teil abgeschnitten. In den von einem Umhüllungsmaterialstreifen 105 umhüllten Filter 8 werden als Perforationslöcher ausgebildete Ventilationslöcher 104 von einer Perforationsvorrichtung eingebracht.

Fig. 2 zeigt schematisch eine Filteransetzvorrichtung 2 im Ausschnitt gemäß dem Stand der Technik. Eine derartige Filteransetzvorrichtung oder Filteransetzmaschine ist unter der Bezeichnung "MAX" der HAUNI Maschinenbau AG, Hamburg, bekannt.

Nach ihrer Herstellung auf einer (Zigaretten-)Strangmaschine werden Tabakstöcke doppelter Gebrauchslänge zu der Filteransetzvorrichtung 2 gefördert und an diese übergeben, an der sie in der Mitte geteilt und mit Filterstopfen doppelter Gebrauchslänge verbunden werden. Hierzu wird den Filterstopfen auch ein Belagpapierstreifen zugeführt, der von einer Belagpapierstreifenrolle oder Bobine abgezogen, beleimt und in Belagpapierblättchen geschnitten wird. Durch Rollen an einer bspw. stationären Gegenrollfläche werden die Zigaretten 7 mit axial fluchtend angelegten Filterstopfen zu fertigen Filterzigaretten 100 konfektioniert.

Bei Herstellung von Doppelfilterzigaretten mit zwei außen liegenden Tabakstöcken und innen angeordnetem Filterstopfen doppelter Gebrauchslänge werden diese vorgenannten Gruppen nach dem Verbinden durch beleimte Belagpapierblättchen durch mittiges Schneiden voneinander getrennt, die Zigaretten 100 einer Reihe gewendet und mit den Zigaretten 100 der anderen Reihe vereinigt und sodann in einer Reihe zur Weiterverarbeitung abgefördert.

Um dem Rauch der Filterzigaretten Nebenluft zuführen zu können, werden Perforationslöcher 104 in die von einem Umhüllungsstreifen oder von dem Belagpapierblättchen umhüllten Filterstopfen eingefügt unter Verwendung einer Perforationsvorrichtung 16 mit einem Laser 17.

Ein von einem steuerbaren Laser 17 ausgehender Laserstrahl 18 gelangt über Spiegel 19a und 19b sowie eine Linse 21 auf den Filter 8, so dass unter Verwendung des Lasers 17 Perforationslöcher 104 in das Belagpapierblättchen und die meist ebenfalls aus Papier bestehende Oberfläche des Filterstopfens gebrannt werden, so dass beim Ziehen an der Filterzigarette 7 kühle Nebenluft durch die Perforationslöcher 104 in den Filter 8 eintreten kann, wo sie sich mit dem durch die Zigarette 7 strömenden Rauchstrom vermischt.

Bei dem Perforationsvorgang befindet sich eine Filterzigarette 100 auf einer Perforationstrommel 22, auf der sie in Richtung des Pfeils 23 gefördert und dabei durch Saugluft in Kanälen 24 in Mulden 26 gehalten wird. Eine Rollvorrichtung 27 in Form eines gemäß Pfeil 28 rotierenden Rollnockens 29 rollt die Filterzigaretten 100 jeweils an einer Rollstelle derart, dass sie während des Rollens ihre Förderbewegung in Richtung des Pfeils 23 unterbrechen, indem sie auf dem Umfang der Prüftrommel 22 relativ zurückrollen. Daher kann der Laserstrahl 18, der in Form von Impulsen vom Laser 17 abgegeben wird, aufeinanderfolgend Perforationslöcher 104 in den Filterstopfen 8 brennen, die dann in Umfangsrichtung hintereinander in einer Reihe liegen.

Die zeitliche Steuerung des Beginns der Perforierung einer Filterzigarette und die einzelnen Laserimpulse in einer Ausgestaltung werden von einer Nockenscheibe ausgelöst, von der der äußere Ring 31 mit den Steuernocken 32 (auslösen) und 33 (Einzelimpulse) zu sehen ist. Die Steuersignale werden von einem Näherungsinitiator 34 an eine Steuerungsvorrichtung 36 des Lasers 17 gegeben.

Im Rahmen der Erfindung sind auch andere Steuerungsvorgänge der Perforationsvorrichtung 16 möglich, um entsprechende Perforationslöcher 104, die auch Ventilationslöcher genannt werden, in die Umhüllungstreifen der Filterzigaretten 100 einzubringen.

Auf einer in Förderrichtung der Filterzigaretten 7 bzw. 100 anschließenden Prüftrommel 30 wird der Gesamtventilationsgrad geprüft. Dazu wird der zu prüfenden Filterzigarette ein Prüfdruck über eine Drossel zugeführt. Ein Messwertwandler setzt den gemessenen Druck in ein elektrisches Signal um und führt diesen der Steuerungsvorrichtung 36 zu.

Ist der Zugwiderstand des Tabakstockes 101 der Zigarette 100 konstant, so wird der Tabakstockventilationsgrad im Wesentlichen nur von Schwankungen der Luftdurchlässigkeit in der Zigarettenumhüllung 103 beeinflusst. Eine entsprechende Messanordnung ist beispielsweise in der DE 27 50 038 C2 offenbart.

Weitere Einrichtungen zum Perforieren von Hüllmaterial von stabförmigen Artikeln der Tabak verarbeitenden Industrie, insbesondere Zigarettenhüllmaterialstreifen, sind in DE 41 06 127 A1 sowie in EP 1 510 142 A2 beschrieben.

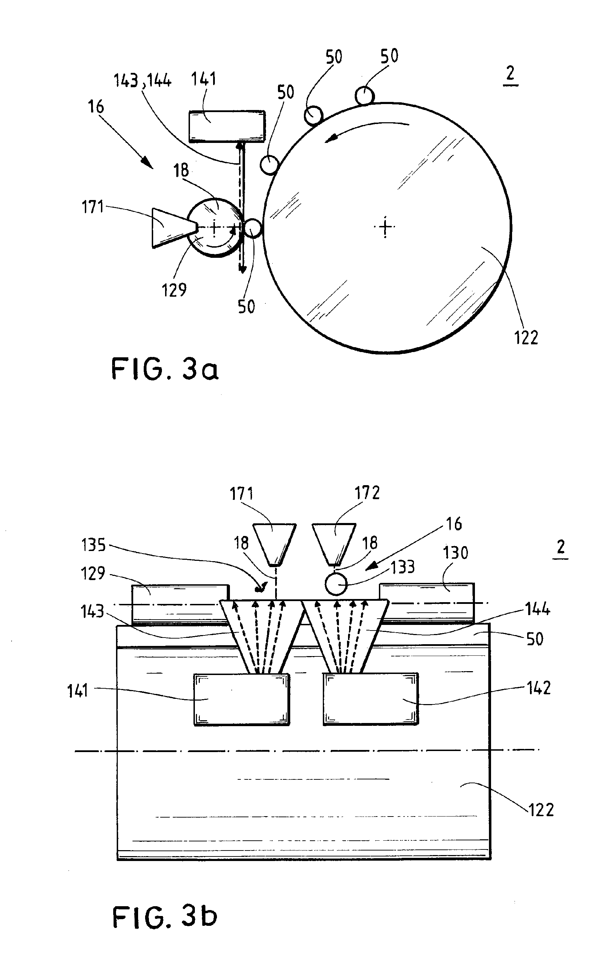

Fig. 3a zeigt ausschnittsweise eine schematische Querschnittsansicht einer Perforationsvorrichtung 16, die Teil einer Filteransetzmaschine oder Filteransetzvorrichtung 2 zur Herstellung von Filterzigaretten ist. Hierbei werden zusammengestellte und verbundene Tabakstock-Filterstopfen-Tabakstockgruppen als stabförmige Doppelzigaretten 50 auf einer als Perforationstrommel oder Laserrolltrommel ausgebildeten Fördertrommel 122 queraxial gefördert, wobei die Fördertrommel 122 entsprechende (hier nicht dargestellte) Aufnahmemulden für die Doppelzigaretten 50 aufweist.

Die Doppelzigaretten 50 werden zu einem Laser gefördert, der zwei Strahlungsköpfe 171, 172 aufweist, um gleichzeitig zwei Perforationsmuster auf die Umhüllung der Doppelzigaretten 50 im Bereich des Belagpapierblättchens bzw. des Umhüllungsmaterialstreifens 105 (vgl. Fig. 1) einzubringen. Beispielsweise wird ein Laserstrahl unter Verwendung von Umlenkspiegeln und halbdurchlässigen Spiegeln umgelenkt und geteilt, so dass aus den Strahlungsköpfen 171, 172 jeweils ein Laserstrahl austritt, um entsprechende Perforationslöcher auf dem Umhüllungsmaterialstreifen 105 auszubilden.

Für die Perforation der Doppelzigaretten 50 sind hierbei im Bereich der Strahlungsköpfe 171, 172 der Perforationsvorrichtung 16 beidseits der Strahlungsköpfe 171, 172 Rollnocken 129, 130 angeordnet, die in Eingriff mit den Doppelzigaretten 50 gebracht werden, um die Doppelzigaretten 50 in Rotation zu versetzen, wobei die Längsachse der zu perforierenden Doppelzigaretten 50 im Wesentlichen ortsfest ist, d.h. mit anderen Worten ihre Lage während der Rollung beibehält, so dass die Rauchartikelgruppen während der Perforation um ihre eigene Längsachse gedreht werden, wodurch auf dem Umhüllungsmaterialstreifen ein entsprechendes Perforationsmuster eingebracht wird. Hierbei befinden sich die entsprechenden Doppelzigaretten 50 in einer positionsneutralen Anordnung.

Benachbart zu den Strahlungsköpfen 171, 172 sind Lichttaster 141, 142 angeordnet, die als Sensoren zur Überwachung des Bereichs zwischen der Austrittsebene der Laserstrahlen aus den Strahlungsköpfen 171, 172 und den Umhüllungen der zu perforierenden Artikelgruppen 50 ausgebildet sind, um unerwünschte entsprechende Störpartikel oder Fremdkörper im Bereich zwischen den Strahlungsköpfen 171, 172 und den zu perforierenden Doppelzigaretten 50 festzustellen. Hierbei wird dieser betriebsmäßig freie Bereich durch die Lichttaster 141, 142 überwacht. Die Lichttaster 141, 142 erzeugen dabei jeweils ein fächerartiges Messfeld 143, 144, um entsprechende Fremdkörper in dem Messfeld 143, 144 zu erfassen.

Beispielsweise ist bei der in Fig. 3b dargestellten schematischen Ansicht eine unerwünschte lose (Fehl-)Zigarette 133 oder ein beliebiger Teil einer Zigarette oder eines Filterstopfens zwischen dem Strahlungskopf 172 und der Doppelzigarette 50 vorhanden, die die Perforation behindern würde bzw. aufgrund der leichten Endzündbarkeit zu einer Störung des Herstellungsprozesses führen könnte. Durch die Erfassung der Fehlzigarette 133 mittels des als Lasersensor ausgebildeten Lichttasters 142 im Bereich zwischen dem Strahlungskopf 172 und der Doppelzigarette 50 wird der Produktionsbetrieb an der Filteransetzmaschine unterbrochen, um die als Fremdkörper erkannte lose (Fehl-)Zigarette 133 zu entfernen.

Wie aus Fig. 3b ferner hervorgeht, können mittels der Lichttaster 141, 142 auch Randbereiche der Rollnocken 129, 130 erfasst werden, wobei es möglich ist, auf einfache Weise zusätzlich die Verschmutzung der Lichttaster 141, 142 festzustellen, indem das von den Rollnocken 129, 130 reflektierte Licht hinsichtlich seiner Intensität auf Obergrenzen und/oder Untergrenzen abgefragt wird.

Ferner ist in Fig. 3b zwischen dem Strahlungskopf 171 und der Doppelzigarette 50 ein Störpartikel in Form eines Tabakkrümels 135 eingezeichnet, der ebenfalls mittels des Lichttasters 141 erfasst wird. Da allerdings der Tabakkrümel 135 eine geringe geometrische Ausdehnung hat, wird dieser von einer (hier nicht dargestellten) Auswerteeinrichtung, die mit den Lichttastern 141, 142 verbunden ist, als unkritisch für den Produktionsablauf an der Filteransetzvorrichtung 2 festgestellt. Erst ab einer vorbestimmten Größe oder Form der Störpartikel im Bereich zwischen den Strahlungsköpfen 171, 172 und den zu perforierenden Doppelzigaretten 50 wird der Produktionsprozess an der Filteransetzvorrichtung 2 nach Erkennen des entsprechenden Störkörpers gestoppt.

Bei den in Fig. 3a und 3b dargestellten Ausführungsbeispielen ist die Ebene der fächerförmigen Messbereiche 143, 144 der Lichttaster 141, 142 parallel zur Längsachse der zu perforierenden stabförmigen Artikel ausgebildet oder aufgespannt, wobei die Strahlung im Wesentlichen quer zur Längsachse der zu perforierenden Doppelzigarette 50 gerichtet ist, so dass in radialer Richtung, bezogen auf die Fördertrommel 122 der Bereich zwischen den Doppelzigaretten 50 und den Strahlungsköpfen 171, 172 abgetastet bzw. erfasst wird.

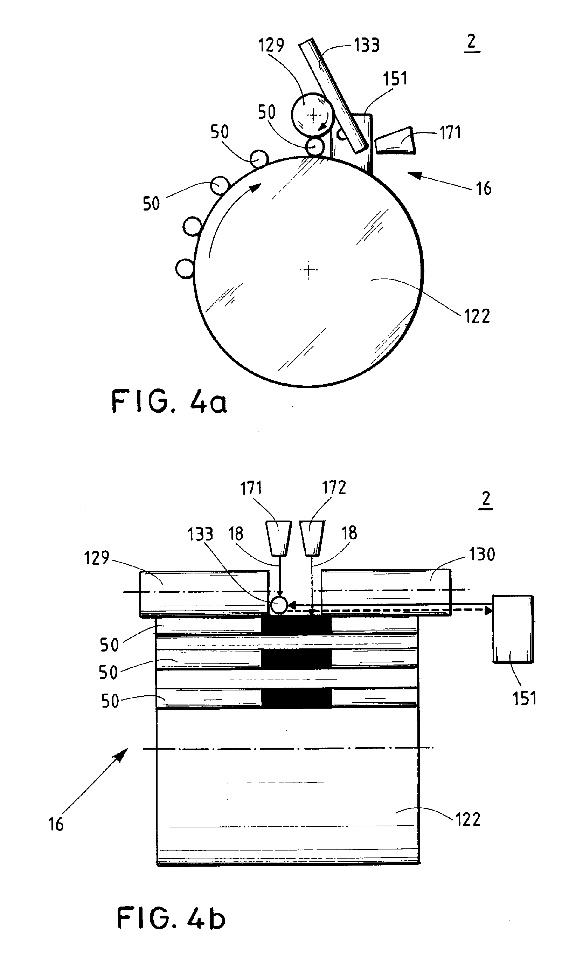

Bei den in Fig. 4a und 4b dargestellten Ausführungsbeispielen ist seitlich an der Fördertrommel 122 ein Lichttaster 151 angeordnet, der in längsaxialer Richtung, bezogen auf die Längsachse der zu perforierenden Doppelzigaretten 50 den Bereich zwischen den Strahlungsköpfen 171, 172 und den zu perforierenden Doppelzigaretten 50 überwacht. Hierdurch können auch entsprechende, den Produktionsprozess beeinflussende unerwünschte Störpartikel oder Fremdkörper, wie z.B. eine lose Zigarette 133 oder ein Teil derselben, im Bereich zwischen der positionsneutralen, zu perforierenden Doppelzigarette 50 und den Strahlungsköpfen 171, 172 der als Bearbeitungsorgan ausgebildeten Laservorrichtung erfassen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Filteransetzvorrichtung
- 7: Filterzigarette
- 8: Filter
- 16: Laser-Perforationseinrichtung
- 17: Laser
- 18: Laserstrahl
- 19a: Spiegel
- 19b: Spiegel
- 21: Linse
- 22: Perforationstrommel
- 23: Pfeil
- 24: Kanäle
- 26: Mulden
- 27: Rollvorrichtung
- 28: Pfeil
- 29: Rollnocken
- 30: Prüftrommel
- 31: äußerer Ring
- 32: Steuernocken
- 33: Steuernocken
- 34: Näherungsinitiator
- 36: Steuerungsvorrichtung
- 50: Doppelzigarette
- 100: Filterzigarette
- 101: Tabakstock
- 103: Zigarettenumhüllung
- 104: Perforationslöcher
- 105: Umhüllungsmaterialstreifen
- 122: Fördertrommel
- 129: Rollnocken
- 130: Rollnocken
- 133: (Fehl-)Zigarette
- 135: Tabakkrümel
- 141: Lichttaster
- 142: Lichttaster
- 143: Messfeld
- 144: Messfeld
- 151: Lichttaster
- 171: Strahlungskopf
- 172: Strahlungskopf

## Patentansprüche

1. Verfahren zum Herstellen von stabförmigen Artikeln (7, 50, 100) der Tabak verarbeitenden Industrie, insbesondere Zigaretten (100) oder Doppelzigaretten (50), wobei die stabförmigen Artikel (7, 50, 100) unter Verwendung mindestens eines Bearbeitungsorgans (17, 171, 172) bearbeitet werden, wobei die stabförmigen Artikel (7, 50, 100) vor und nach der Bearbeitung der Artikel (7, 50, 100) queraxial gefördert werden, **dadurch gekennzeichnet, dass** ein, insbesondere betriebsmäßig freier, Bereich zwischen der Oberfläche der stabförmigen Artikel (7, 50, 100) und dem mindestens einen Bearbeitungsorgan (17, 171, 172) unter Verwendung einer Bereichsüberwachungseinrichtung (141, 142, 151) wenigstens teilweise, überwacht wird, wobei insbesondere der Bereich, insbesondere kontinuierlich oder intermittierend, auf die Anwesenheit von Störpartikeln (133, 135) und/oder von Fremdkörpern (133, 135) im Bereich zwischen der Oberfläche der stabförmigen Artikel (7, 50, 100) und dem mindestens einen Bearbeitungsorgan (17, 171, 172) überwacht wird.

2. Verfahren nach Anspruch 1, **dadurch gekennzeichnet, dass** der Bereich zwischen der Oberfläche der stabförmigen Artikel (7, 50, 100) und dem mindestens einen Bearbeitungsorgan (17, 171, 172) vor der Bearbeitung der stabförmigen Artikel (7, 50, 100) und/oder während der Bearbeitung der stabförmigen Artikel (7, 50, 100) und/oder nach Bearbeitung der stabförmigen Artikel (7, 50, 100) überwacht wird.

3. Verfahren nach Anspruch 1 oder 2, **dadurch gekennzeichnet, dass** während der Bearbeitung der stabförmigen Artikel (7, 50, 100) der jeweilige stabförmige Artikel (7, 50, 100) positionsneutral in Bezug auf das Bearbeitungsorgan (17, 171, 172) angeordnet wird oder ist.

4. Verfahren nach einem der Ansprüche 1 bis 3, **dadurch gekennzeichnet, dass** die stabförmigen Artikel (7, 50, 100) unter Verwendung von mindestens zwei Bearbeitungsorganen (17, 171, 172), die als Laserstrahlungsköpfe (171, 172) ausgebildet sind, mit zwei Perforationsmustern (104) versehen werden.

5. Verfahren nach einem der Ansprüche 1 bis 4, **dadurch gekennzeichnet, dass** der Bereich zwischen der Oberfläche der stabförmigen Artikel (7, 50, 100) und dem mindestens einen Bearbeitungsorgan (17, 171, 172) unter Verwendung von mindestens einem als Bereichsüberwachungseinrichtung (141, 142, 151) ausgebildeten Lichttaster (141, 142, 151), vorzugsweise Laserlichtaster (141, 142, 151), überwacht wird.

6. Verfahren nach einem der Ansprüche 1 bis 5, **dadurch gekennzeichnet, dass** in Abhängigkeit der von der Bereichsüberwachungseinrichtung (141, 142, 151) im Bereich zwischen der Oberfläche der stabförmigen Artikel (7, 50, 100) und dem mindestens einen Bearbeitungsorgan (17, 171, 172) erfassten Partikelform und/oder Partikelgröße und/oder der Anwesenheitsdauer von wenigstens einem Partikel im Bereich zwischen der Oberfläche der stabförmigen Artikel (7, 50, 100) und dem mindestens einen Bearbeitungsorgan (17, 171, 172) der Herstellungsprozess beeinflusst, insbesondere gestoppt, wird.

7. Verfahren nach einem der Ansprüche 1 bis 6, **dadurch gekennzeichnet, dass** unter Verwendung der Bereichsüberwachungseinrichtung (141, 142, 151) der Bereich in Bezug auf die Längsachse der stabförmigen Artikel (7, 50, 100) in längsaxialer Richtung und/oder in queraxialer Richtung überwacht wird.

8. Verfahren nach einem der Ansprüche 1 bis 7, **dadurch gekennzeichnet, dass** der Bereich zwischen der Oberfläche der stabförmigen Artikel (7, 50, 100) und dem mindestens einen Bearbeitungsorgan (17, 171, 172) fächerartig überwacht wird.

9. Verfahren nach einem der Ansprüche 1 bis 8, **dadurch gekennzeichnet, dass** in Abhängigkeit der Größe der Störpartikel (133, 135) und/oder der Größe der Fremdkörper (133, 135) die Bearbeitung der stabförmigen Artikel (7, 50, 100) durch das mindestens eine Bearbeitungsorgan (17, 171, 172), vorzugsweise für eine vorbestimmte Zeitdauer, unterbrochen wird und/oder die Herstellung von stabförmigen Artikeln (7, 50, 100) gestoppt wird.

10. Maschine der Tabak verarbeitenden Industrie, insbesondere Filteransetzmaschine, zum Herstellen von stabförmigen Artikeln (7, 50, 100) der Tabak verarbeitenden Industrie, insbesondere Filterzigaretten, mit mindestens einem Bearbeitungsorgan (17, 171, 172) zum Bearbeiten der stabförmigen Artikel (7, 50, 100), **dadurch gekennzeichnet, dass** eine Bereichsüberwachungseinrichtung (141, 142, 151) zum wenigstens teilweisen Überwachen eines, insbesondere betriebsmäßig freien, Bereichs zwischen der Oberfläche eines stabförmigen Artikels (7, 50, 100) und dem mindestens einen Bearbeitungsorgan (17, 171, 172) vorgesehen ist, wobei insbesondere unter Verwendung der Bereichsüberwachungseinrichtung (141, 142, 151) die Anwesenheit von Störpartikeln und/oder Fremdkörpern im Bereich zwischen der Oberfläche der stabförmigen Artikel (7, 50, 100) und dem mindestens einen Bearbeitungsorgan (17, 171, 172) überwachbar ist, wobei die Bereichsüberwachungseinrichtung (141, 142, 151) benachbart zu einem Förderorgan, vorzugsweise einer Fördertrommel, für die stabförmigen Artikel (7, 50, 100) ortsfest angeordnet ist.

11. Maschine nach Anspruch 10, **dadurch gekennzeichnet, dass** das mindestens eine Bearbeitungsorgan (17, 171, 172) als Laserperforationseinrichtung (16), insbesondere als Laser-strahlungskopf (171, 172) ausgebildet ist und benachbart zu einem Förderorgan (122) für die stabförmigen Artikel (7, 50, 100), vorzugsweise Fördertrommel (122), ortsfest angeordnet ist, wobei das mindestens eine Bearbeitungsorgan (171, 172) in Bezug auf die Längsachse der auf dem Förderorgan angeordneten stabförmigen Artikel (7, 50, 100) in längsaxialer Richtung neben wenigstens einer an den stabförmigen Artikeln (7, 50, 100) angreifenden Rollvorrichtung (27), insbesondere Rollnocken (29, 129, 130), angeordnet ist.

12. Maschine nach Anspruch 10 oder 11, **dadurch gekennzeichnet, dass** die Bereichsüberwachungseinrichtung (141, 142, 151) derart angeordnet ist, dass der Bereich zwischen der Oberfläche der stabförmigen Artikel (7, 50, 100) und dem wenigstens einen Bearbeitungsorgan (17, 171, 172) quer, insbesondere senkrecht, zur jeweiligen Längsachse der stabförmigen Artikel (7, 50, 100) überwachbar ist.

13. Maschine nach Anspruch 10 oder 11, **dadurch gekennzeichnet, dass** die Bereichsüberwachungseinrichtung (141, 142, 151) derart angeordnet ist, dass der Bereich zwischen der Oberfläche der stabförmigen Artikel (7, 50, 100) und dem mindestens einen Bearbeitungsorgan (17, 171, 172) parallel zur jeweiligen Längsachse der stabförmigen Artikel (7, 50, 100) überwachbar ist.

14. Maschine nach einem der Ansprüche 10 bis 13, **dadurch gekennzeichnet, dass** die Bereichsüberwachungseinrichtung (141, 142, 151) mit einer Auswerteeinrichtung verbunden ist, so dass unter Verwendung der Auswerteeinrichtung die Größe der Störpartikel (133, 135) und/oder die Größe der Fremdkörper (133, 135) im Bereich zwischen der Oberfläche der stabförmigen Artikel (7, 50, 100) und dem mindestens einen Bearbeitungsorgan (17, 171, 172) ermittelbar ist und in Abhängigkeit der Größe der Störpartikel (133, 135) und/oder der Größe der Fremdkörper (133, 135) das mindestens eine Bearbeitungsorgan (17, 171, 172) deaktiviert ist und/oder die Maschine abgeschaltet wird oder ist.
